# EUROPÄISCHE PATENTANMELDUNG

(11) **EP 2 309 087 A2**
(43) Veröffentlichungstag der Anmeldung: **13.04.2011**
(21) Anmeldenummer: 10172793.1
(22) Anmeldetag: 13.08.2010
(51) Int. Cl.: E05F 15/14, E05F 15/12

(54) **Standprofil mit Türscharnier für Tore, insbesondere für Schiebetore**

(30) Priorität: 07.10.2009 DE 202009013500 U
(71) Anmelder: BelFox Torautomatik Produktions + Vertriebs GmbH, 36148 Kalbach (DE)
(72) Erfinder: Bellinger, Gerhard, 36148 Kalbach (DE)
(74) Vertreter: Kramer - Barske - Schmidtchen

(57) **Zusammenfassung**

Ein Standprofil für Tore weist eine Profilschiene (12), die ein erstes Scharnierelement (20) und einen Abschnitt (26) aufweist, wobei das erste Scharnierelement (20) und der Abschnitt (26) integral mit der Profilschiene (12) ausgebildet sind und eine Abdeckung (34), die ein zweites Scharnierelement (46) und einen Abschnitt (40) aufweist, wobei das zweite Scharnierelement (46) und der Abschnitt (40) integral mit der Abdeckung (34) ausgebildet sind, auf. Die Abdeckung (34) und die Profilschiene (12) sind durch das erste Scharnierelement (20) und das zweite Scharnierelement (46) derart miteinander verbunden, dass sie ein Türscharnier bilden und die Abdeckung (34) schwenkbar an der Profilschiene (12) angebracht ist. Der Abschnitt (26) und der Abschnitt (40) sind so geformt, dass sie derart unmittelbar miteinander in Eingriff bringbar sind, dass eine schmutz- und/oder wasserdichte Verbindung zwischen der Abdeckung (34) und der Profilschiene (12) gebildet ist.

## Beschreibung

Die Erfindung betrifft ein Standprofil mit Türscharnier für Tore, insbesondere für Schiebetore, das als Stand- oder Antriebssäule für Schiebetore verwendbar ist. An diesen Säulen sind die Tore bewegbar angebracht. Üblicherweise befinden sich im Inneren eines als Antriebssäule ausgebildeten Profils elektrische Versorgungsleitungen und eine Antriebsvorrichtung, die angepasst sind, ein Tor wie beispielsweise ein Schiebetor zu bewegen. Die Außenseiten des Profils können mit einer Blende und/oder einer Sicherheitskontaktleiste versehen sein.

Eine Anwendung für solche Profile sind Schiebetorsysteme, die beispielsweise im Außenbereich eingesetzt werden. Solche Torsysteme können vorzugsweise elektrisch betätigte Tore an Umzäunungen sein.

Momentan werden die Profile mit einem Scharnier versehen, an dem eine Abdeckung gelenkig angebracht ist. Die Abdeckung dient dazu, eine den Querschnitt des Profils freigebende Öffnung zu verschließen. Diese Öffnung soll einen Zugriff auf die elektrischen Versorgungsleitungen und/oder die Antriebsvorrichtung zu Wartungs- oder Reparaturzwecken erlauben. Insbesondere bei Außenanwendung des Profils besteht dabei die Gefahr, dass Schmutz und/oder Spritz- bzw. Regenwasser eindringt. Dies kann zu Schäden an den elektrischen Versorgungsleitungen und/oder der Antriebsvorrichtung führen. Dies kann zur Folge haben, dass das Torsystem nicht mehr seine Funktion erfüllen kann, d.h. das Tor nicht mehr zum Öffnen oder Schließen bewegt werden kann.

Die DE 199 20 534 C1 offenbart eine Profilschiene mit U-förmigem Querschnitt zur Führung von Schiebeelementen, die ein oberes Abdeckelement aufweist. Die Profilschiene weist ein Unterteil, einen ersten Schenkel und einen zweiten Schenkel auf. Die Schenkel erstrecken sich von dem Unterteil nach oben. Das Abdeckelement ist mittels einer Gelenkverbindung um einen Schwenkwinkel von etwa 90 Grad an der Profilschiene schwenkbar gehalten. Die Gelenkverbindung besteht aus einem ersten Gelenkelement an dem Abdeckelement und einem komplementär geformten zweiten Gelenkelement mit einem kreisförmigen Querschnitt an dem ersten Schenkel der Profilschiene. Als Schutz vor Verschmutzungen des zwischen den Schenkeln gebildeten Laufkanals weist das Abdeckelement an seiner dem ersten Gelenkelement gegenüberliegenden Seite eine Profilierung auf, in der ein Dichtelement gehalten ist. In der Schließposition liegt das Dichtelement auf dem zweiten Schenkel auf.

Davon ausgehend ist es eine Aufgabe der Erfindung, ein Standprofil für Tore vorzusehen, bei dem die Abdeckung ohne zusätzliches, d.h. separates, Scharnier angebracht werden kann und bei dem die Abdeckung auch ohne Dichtelement mit der Profilschiene dicht schließt, so dass ein Eindringen von Schmutz und Wasser in das Profil verhindert wird.

Diese Aufgabe wird mit einem Standprofil für Tore mit den Merkmalen des Anspruchs 1 gelöst. Bevorzugte Ausführungsformen und Anwendungen sind in den abhängigen Ansprüchen angegeben.

Insbesondere wird ein Standprofil für Tore vorgesehen, das eine Profilschiene mit einem ersten Scharnierelement und einem Abschnitt, wobei das erste Scharnierelement und der Abschnitt integral mit der Profilschiene ausgebildet sind, und eine Abdeckung mit einem zweiten Scharnierelement und einem Abschnitt, wobei das zweite Scharnierelement und der Abschnitt integral mit der Abdeckung ausgebildet sind, aufweist. Die Abdeckung und die Profilschiene sind durch das erste Scharnierelement und das zweite Scharnierelement derart miteinander verbunden, dass sie ein Türscharnier bilden und die Abdeckung schwenkbar an der Profilschiene angebracht ist. Der Abschnitt an der Abdeckung und der Abschnitt an der Profilschiene sind so geformt, dass sie derart unmittelbar miteinander in Eingriff bringbar sind, dass eine schmutz- und/oder wasserdichte Verbindung zwischen der Abdeckung und der Profilschiene gebildet ist. Die Abschnitte sind insbesondere derart ausgebildet, dass Schmutz und/oder Wasser, die an der Abdeckung und/oder an der Oberfläche an der Profilschiene anhaften, bei der Bewegung der Abdeckung in die Schließposition nach außen von der Profilschiene weg geschoben bzw. geleitet werden. Unmittelbarer Eingriff bedeutet dabei, dass die Dichtwirkung alleine durch die Formgebung der Abschnitte bewirkt wird.

Der Erfindung liegt der Gedanke zugrunde, die Profilschiene und die Abdeckung integral mit Bestandteilen eines Scharniers auszubilden und eine derartige Form zu geben, dass die Profilschiene und die Abdeckung auf einfache Weise, z.B. Ziehen, hergestellt werden können und ohne zusätzliche Bauteile, wie beispielsweise Gelenke, Scharniere und dergleichen, miteinander so verbunden werden können, dass die Abdeckung die Profilschiene schmutz- und wasserdicht nur durch den Formschluss zwischen Abdeckung und Profilschiene verschließen kann. Bevorzugt weist die Profilschiene einen ersten Schenkel und einen zweiten Schenkel, die einander gegenüberliegen, auf, ist das erste Scharnierelement an dem ersten Schenkel angeordnet, und ist der Abschnitt der Profilschiene an dem zweiten Schenkel angeordnet. Dadurch kann die Abdeckung den Bereich zwischen den Schenkeln dicht verschließen.

Bevorzugt weist der Abschnitt eine geneigte Oberfläche auf, weist der Abschnitt der Abdeckung eine Abschrägung mit einer komplementär zu der Oberfläche geneigten Oberfläche auf, und ist die Oberfläche mit der Abschrägung in Eingriff bringbar. Dadurch kann ein dichter Formschluss zwischen den geneigten, ebenen Flächen der Abschnitte erzielt werden.

Bevorzugt ist die Oberfläche in Richtung zu dem ersten Schenkel geneigt. Dadurch kann ein fester Eingriff mit dem Abschnitt der Abdeckung erzielt werden.

Bevorzugt ist die Oberfläche in Richtung zu dem ersten Schenkel derart geneigt, dass sich ein Querschnitt des Abschnitts in Richtung zu einem freien Ende des zweiten Schenkels verjüngt. Dadurch kann Wasser und/oder Schmutz sicher nach außen verdrängt werden.

Bevorzugt ist der Abschnitt der Profilschiene auf einer dem ersten Schenkel abgewandten Seite des zweiten Schenkels angeordnet. Dadurch kann ein Eindringen von Wasser und/oder Schmutz in das Innere des Profils sicher verhindert werden.

Bevorzugt ist die Abdeckung im Wesentlichen plattenförmig ausgebildet.

Bevorzugt ist der Abschnitt der Abdeckung von dieser vorstehend angeordnet. Dadurch kann bei entsprechender Schwenkbewegung der Abdeckung dieser Abschnitt von außen sicher mit der Profilschiene in Eingriff gebracht werden.

Bevorzugt weist die Profilschiene einen im Wesentlichen U-förmigen Querschnitt auf und ist die Abdeckung zwischen einer Position, in der der Querschnitt der Profilschiene freigegeben ist, und einer Schließposition, in der die Abdeckung den Querschnitt der Profilschiene verschließt, bewegbar. Dadurch kann das Profil einen insgesamt relativ großen Hohlraum aufweisen, der bei Öffnung der Abdeckung vollständig frei zugänglich ist.

Bevorzugt weist die Abdeckung ein Verriegelungselement auf, das angepasst ist, eine Schwenkbewegung der Abdeckung aus dem Eingriff mit der Profilschiene zu verhindern. Dadurch kann ein unbefugter Zugriff auf das Innere des Profils sicher verhindert werden.

Nachfolgend wird die Erfindung beispielhaft und anhand der beigefügten Figuren beschrieben, in denen:
- Fig. 1: die Profilschiene in einem Querschnitt senkrecht zur Längsrichtung der Profilschiene zeigt;
- Fig. 2: die Abdeckung in einem Querschnitt senkrecht zur Längsrichtung der Abdeckung zeigt; und
- Fig. 3: das aus der Profilschiene und der Abdeckung zusammengebaute Profil in einem Quer- schnitt senkrecht zur Längsrichtung des Profils in der Schließposition der Abdeckung zeigt.

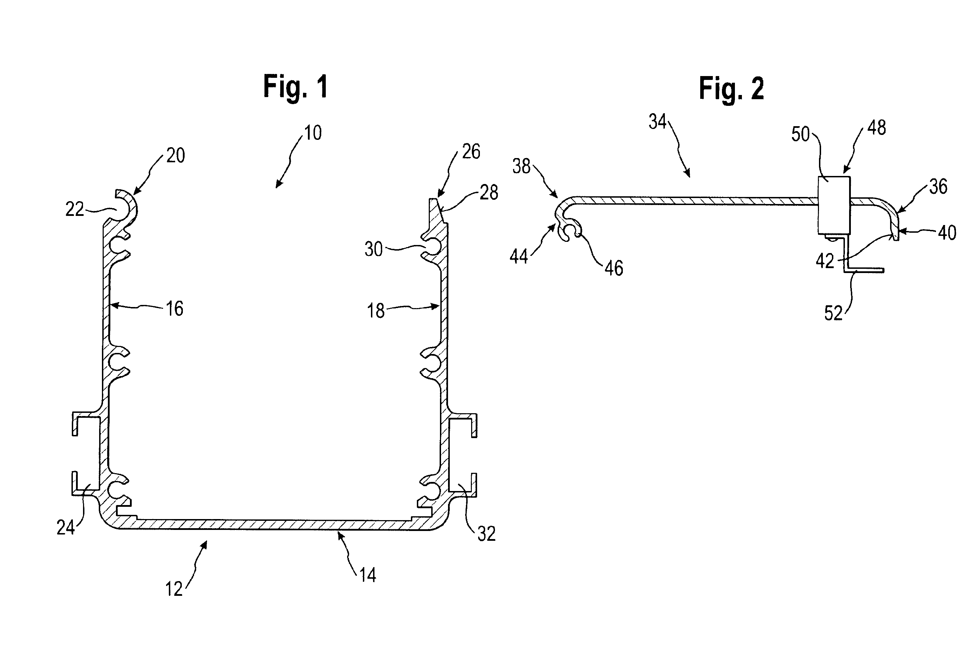

Fig. 1 zeigt eine Ansicht eines Standprofils 10 für Schiebtore, die eine Ansicht eines Querschnitts einer Profilschiene 12 geschnitten senkrecht zu einer Längsrichtung der Profilschiene 12 darstellt. Die in diesem Querschnitt im Wesentlichen U-förmige Profilschiene 12 weist einen im Wesentlichen plattenförmigen Verbindungs- bzw. Unterteil 14, einen ersten Schenkel 16 und einen zweiten Schenkel 18 auf. Der erste Schenkel 16 und der zweite Schenkel 18 befinden sich an sich gegenüberliegenden Enden des Unterteils 14 und erstrecken sich beide im Wesentlichen senkrecht zu dem Unterteil 14, so dass sich die Schenkel 16 und 18 gegenüberliegen.

Der erste Schenkel 16 weist an seinem von dem Unterteil 14 abgewandten Ende ein erstes Scharnierelement 20 auf. Das Scharnierelement 20 weist in der Ansicht der Fig. 1 einen Querschnitt auf, der im Wesentlichen einen Drei-Viertel-Kreis darstellt, und ist integral mit dem ersten Schenkel 16 ausgebildet. Dadurch ist das Scharnierelement 20 auf seiner dem zweiten Schenkel 18 zugewandten Seite konvex in Richtung zu dem zweiten Schenkel 18 gewölbt und weist auf der dem zweiten Schenkel 18 abgewandten Seite eine kreisförmige Ausnehmung 22 auf. Ferner weist der erste Schenkel 16 in der Nähe des Unterteils 14 auf der dem zweiten Schenkel 18 abgewandten Seite ein sogenanntes C-Profil 24, d.h. ein Profil mit einem C-fömigen Querschnitt in der Ansicht der Fig. 1, auf. Dieses C-Profil 24 dient zur Aufnahme bzw. zum Anbringen einer Sicherheitskontaktleiste (nicht gezeigt).

Der zweite Schenkel 18 weist an seinem von dem Unterteil 14 abgewandten Ende einen Abschnitt 26 auf, der auf der von dem ersten Schenkel 16 abgewandten Seite eine Oberfläche 28 aufweist, die derart in Richtung zu dem ersten Schenkel 16 geneigt ist, dass sich der Querschnitt des zweiten Schenkels 18 in Richtung zu dem von dem Unterteil 14 abgewandten Ende des zweiten Schenkels 18 hin verjüngt. In der Nähe des Abschnitts 26 weist der zweite Schenkel 18 auf der dem ersten Schenkel 16 zugewandten Seite eine teilkreisförmige Ausnehmung 30 auf, die später näher erläutert wird. Ferner weist der zweite Schenkel 18 in der Nähe des Unterteils 14 auf der dem ersten Schenkel 16 abgewandten Seite ein C-Profil 32 auf. Dieses C-Profil 32 dient zur Aufnahme bzw. zum Anbringen einer Blende (nicht gezeigt).

Fig. 2 zeigt eine Ansicht eines Standprofils 10 für Schiebtore, die eine Ansicht eines Querschnitts einer Abdeckung 34 für die Profilschiene 12 geschnitten senkrecht zu einer Längsrichtung der Profilschiene 12, d.h. im gleichen Schnitt wie Fig. 1, darstellt. Die Abdeckung 34 ist im Wesentlichen plattenförmig ausgebildet und weist in Querrichtungen senkrecht zu der Längsrichtung je ein erstes Ende 36 und zweites Ende 38 auf. Das erste Ende 36 weist einen senkrecht von dem plattenförmigen Teil der Abdeckung 34 vorstehenden Abschnitt 40 auf. Der Abschnitt 40 weist auf seiner dem zweiten Ende 36 zugewandten Seite eine Abschrägung 42 mit einer Oberfläche auf, die zu der Oberfläche 28 des Abschnitts 26 des zweiten Schenkels 18 komplementär geneigt ist, und ist integral mit der Abdeckung 34 ausgebildet. Das zweite Ende 38 weist einen im Wesentlichen in der gleichen Richtung wie der Abschnitt 40 an dem ersten Ende 36 vorstehenden Abschnitt 44 auf. Insbesondere weist der Abschnitt 44 ein zweites Scharnierelement 46 auf, das einen im Wesentlichen kreisförmigen Querschnitt, der zu der Ausnehmung 22 des ersten Scharnierelements 20 komplementär ausgebildet ist, aufweist, ist mit der Abdeckung 34 integral ausgebildet und derart von der Abdeckung 34 vorstehend und gebogen ausgebildet, dass das Scharnierelement 46 in Richtung zu dem ersten Ende 36 der Abdeckung 34 zeigt.

Die Abdeckung 34 weist ferner ein Verriegelungselement 48 auf. Das Verriegelungselement 48 ist ein Schloss und besteht aus einem Schließzylinder 50, der die Abdeckung 34 in der gleichen Richtung, wie der Abschnitt 40 sich erstreckt, durchdringt, und einem Z- förmigen Haken 52, der auf der in der Durchdringungsrichtung des Schließzylinders 50 liegenden Seite der Abdeckung drehbar an dem Schließzylinder 50 angeordnet ist.

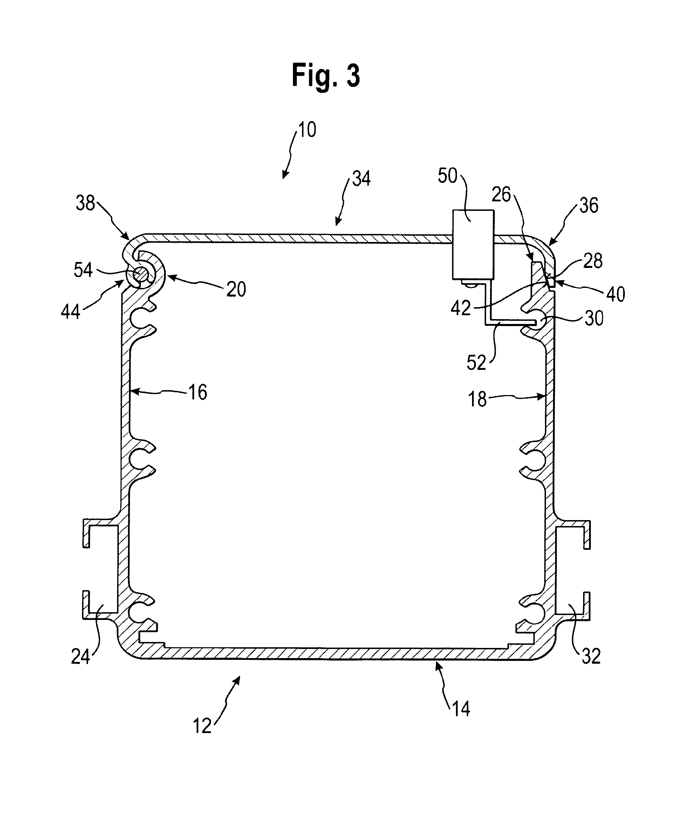

Fig. 3 zeigt das Standprofil 10 für Schiebtore, in dem aus der Profilschiene 12 und der Abdeckung 34 zusammengebauten Zustand in einem Querschnitt senkrecht zur Längsrichtung des Profils 10 in der Schließposition der Abdeckung 34. Das zweite Scharnierelement 46 der Abdeckung 34 ist in der Ausnehmung 22 des ersten Scharnierelements 20 schwenkbar um eine Achse 54 in der Längsrichtung des Profils 10 derart angeordnet, dass das erste Scharnierelement 20 und das zweite Scharnierelement 46 ein Türscharnier bilden. Insbesondere ist die Abdeckung 34 zwischen einer Position, in der der U-förmige Querschnitt der Profilschiene 12 freigegeben, d.h. zugänglich ist, und einer Schließposition, in der der U-förmige Querschnitt der Profilschiene 12 durch die Abdeckung 34 verschlossen ist, schwenkbar bzw. bewegbar. In der in Fig. 3 gezeigten Schließposition der Abdeckung 34 weist das Profil 10 einen insgesamt hohlen und im Wesentlichen quadratischen Querschnitt auf. Ferner berührt in der Schließposition der Abdeckung 34 die Abschrägung 42 des Abschnitts 40 der Abdeckung 34 die Oberfläche 28 des Abschnitts 26 des zweiten Schenkels 18 von außen, d.h. einer Seite des zweiten Schenkels 18, die dem ersten Schenkel 16 abgewandt ist, derart, dass diese miteinander in Eingriff stehen.

Durch die Art der Ausbildung der Oberfläche 28 und der Abschrägung 42 mit den speziellen Neigungen wird erreicht, dass Schmutz und/oder Wasser, die sich an diesen befinden, bei der Bewegung der Abdeckung 34 in die Schließposition nach außen von dem Profil 10 weg geschoben bzw. geleitet werden. Ferner wird durch die Art der Ausbildung der Oberfläche 28 und der Abschrägung 42 mit den speziellen Neigungen in der Schließposition der Abdeckung 34 ohne zusätzliches Dichtbauteil zwischen der Oberflächen 28 und der Abschrägung 40 erreicht, dass kein Schmutz und/oder Wasser von außen in das Innere des Profils 10 eindringen kann. Ferner kann die Abdeckung 34 in der Schließposition durch entsprechende Betätigung des Verriegelungselements 48, d.h. Drehung des Schließzylinders 50, der Haken 52 mit der Ausnehmung 30 an dem zweiten Schenkel 18 in Eingriff gebracht werden. Dadurch kann die Abdeckung 34 an der Profilschiene 12 verriegelt werden, so dass die Abdeckung 34 nicht mehr bewegt bzw. verschwenkt werden kann.

Durch diese spezielle Geometrie ist eine einfache Herstellung möglich. So kann das Profil beispielsweise aus Aluminium sein und durch Metallziehen gefertigt sein.

Das Profil 10 kann bautechnische Alternative aufweisen. Im Folgenden werden einige Varianten beschrieben.

Die Profilschiene kann jeden beliebigen Querschnitt, insbesondere rund, oval, trapezförmig usw. aufweisen. Die Abdeckung kann jeden beliebigen Querschnitt, insbesondere rund, oval, trapezförmig usw. aufweisen, solange sie so ausgebildet ist, dass sie formbedingt mit der Profilschiene schmutz- bzw. wasserdicht schließen kann. Das Verriegelungselement kann jede beliebige Form aufweisen solange es seine Funktion erfüllt. Insbesondere kann an dem zweiten Schenkel ein Vorsprung angebracht sein und an dem Schließelement eine Ausnehmung drehbar angebracht sein, die mit dem Vorsprung in Eingriff bringbar ist. Das Verriegelungselement kann auch entfallen, sofern keine Verriegelungsmöglichkeit gewünscht ist. Die Anordnung der C-Profile kann entfallen. Auch kann nur ein C-Profil vorgesehen sein. Die Anordnung der Sicherheitskontaktleiste und der Blende an den jeweiligen C-Profilen kann vertauscht werden.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

### Bezugszeichenliste

- 10: Profil
- 12: Profilschiene
- 14: Unterteil
- 16: erster Schenkel
- 18: zweiter Schenkel
- 20: erstes Scharnierelement
- 22: Ausnehmung
- 24: C-Profil
- 26: Abschnitt
- 28: Oberfläche
- 30: Ausnehmung
- 32: C-Profil
- 34: Abdeckung
- 36: erstes Ende
- 38: zweites Ende
- 40: Abschnitt
- 42: Abschrägung
- 44: Abschnitt
- 46: zweites Scharnierelement
- 48: Verriegelungselement
- 50: Schließzylinder
- 52: Haken
- 54: Achse

## Patentansprüche

1. Standprofil für Tore, mit
einer Profilschiene (12), die ein erstes Scharnierelement (20) und einen Abschnitt (26) aufweist, wobei das erste Scharnierelement (20) und der Abschnitt (26) integral mit der Profilschiene (12) ausgebildet sind, und
einer Abdeckung (34), die ein zweites Scharnierelement (46) und einen Abschnitt (40) aufweist, wobei das zweite Scharnierelement (46) und der Abschnitt (40) integral mit der Abdeckung (34) ausgebildet sind, bei dem
die Abdeckung (34) und die Profilschiene (12) durch das erste Scharnierelement (20) und das zweite Scharnierelement (46) derart miteinander verbunden sind, dass sie ein Türscharnier bilden und die Abdeckung (34) schwenkbar an der Profilschiene (12) angebracht ist,
der Abschnitt (26) und der Abschnitt (40) so geformt sind, dass sie derart unmittelbar miteinander in Eingriff bringbar sind, dass eine schmutz- und/oder wasserdichte Verbindung zwischen der Abdeckung (34) und der Profilschiene (12) gebildet ist.

2. Standprofil nach Anspruch 1, bei dem
die Profilschiene (12) einen ersten Schenkel (16) und einen zweiten Schenkel (18), die einander gegenüberliegen, aufweist,
das erste Scharnierelement (20) an dem ersten Schenkel (16) angeordnet ist, und
der Abschnitt (26) an dem zweiten Schenkel (18) angeordnet ist.

3. Standprofil nach Anspruch 1 oder 2, bei dem
der Abschnitt (26) eine geneigte Oberfläche (28) aufweist,
der Abschnitt (40) eine Abschrägung (42) mit einer komplementär zu der Oberfläche (28) geneigten Oberfläche aufweist, und
die Oberfläche (28) mit der Abschrägung (42) in Eingriff bringbar ist.

4. Standprofil nach Anspruch 3, bei dem die Oberfläche (28) in Richtung zu dem ersten Schenkel (16) geneigt ist.

5. Standprofil nach Anspruch 3 oder 4, bei dem die Oberfläche (28) in Richtung zu dem ersten Schenkel (16) derart geneigt ist, dass sich ein Querschnitt des Abschnitts (26) in Richtung zu einem freien Ende des zweiten Schenkels (18) verjüngt.

6. Standprofil nach einem der Ansprüche 3 bis 5, bei dem der Abschnitt (26) auf einer dem ersten Schenkel (16) abgewandten Seite des zweiten Schenkels (18) angeordnet ist.

7. Standprofil nach einem der vorhergehenden Ansprüche, bei dem die Abdeckung (34) im Wesentlichen plattenförmig ausgebildet ist.

8. Standprofil nach einem der vorhergehenden Ansprüche, bei dem der Abschnitt (40) von der Abdeckung (34) vorstehend angeordnet ist.

9. Standprofil nach einem der vorhergehenden Ansprüche, bei dem die Profilschiene (12) einen im Wesentlichen U-förmigen Querschnitt aufweist, und die Abdeckung (34) zwischen einer Position, in der der Querschnitt der Profilschiene (12) freigegeben ist, und einer Schließposition, in der die Abdeckung (34) den Querschnitt der Profilschiene (12) verschließt, bewegbar ist.

10. Standprofil nach einem der vorhergehenden Ansprüche, bei dem die Abdeckung (34) ein Verriegelungselement (48) aufweist, das angepasst ist, eine Schwenkbewegung der Abdeckung (34) aus dem Eingriff mit der Profilschiene (12) zu verhindern.
